**Europäisches Patentamt**

**European Patent Office**

**Office européen des brevets**

(19)

(11) Veröffentlichungsnummer: **0 216 282**
**A2**

(12) ## EUROPÄISCHE PATENTANMELDUNG

(21) Anmeldenummer: 86112682.9

(22) Anmeldetag: 13.09.86

(51) Int. Cl.⁴: **B 62 J 6/00**

(30) Priorität: 13.09.85 DE 3532669

(43) Veröffentlichungstag der Anmeldung:
**01.04.87 Patentblatt 87/14**

(84) Benannte Vertragsstaaten:
**AT BE CH DE FR GB IT LI NL SE**

(71) Anmelder: UNION Sils, van de Loo & Co. GmbH
Ardeyer Strasse 13/15
D-5758 Fröndenberg(DE)

(72) Erfinder: Hartmann, Jan Dirk, Dipl.-Wi.-Ing.
Schwitter Weg 37 b
D-5750 Menden 1(DE)

(72) Erfinder: Vögler, Bernd, Dipl.-Ing.
Horstkottenknapp 7
D-5804 Herdecke(DE)

(72) Erfinder: Bech, Hans-Gert, Dr.-Ing.
Bonhoefferstrasse
D-5758 Fröndenberg(DE)

(72) Erfinder: Konzorr, Hubert
Paul-Löbe-Strasse
D-5758 Fröndenberg(DE)

(72) Erfinder: Krumme, Karl-Heinz, Dipl.-Ing.
Unionstrasse
D-4760 Werl(DE)

(72) Erfinder: Wippermann, Friedrich-Wilhelm, Dipl.-Ing.
Zum Berger See 79
D-5820 Gevelsberg(DE)

(72) Erfinder: Luig, Paul, Dipl.-Ing.
Ostbürener Strasse 69
D-5758 Fröndenberg(DE)

(72) Erfinder: Mohs, Wolfgang
Erikaweg
D-5750 Menden 1(DE)

(74) Vertreter: Patentanwaltsbüro Cohausz & Florack
Postfach 14 01 47
D-4000 Düsseldorf 1(DE)

(54) **Fahrradlichtmaschine.**

(57) Die Erfindung betrifft eine Fahrradlichtmaschine in Form eines Außenläufers mit einem walzenförmigen Gehäuse, das durch Anlage seines Walzenmantels am Fahrradreifen antreibbar ist. Die Oberfläche des Walzenmantels weist Mittel für eine kraftschlüssige Anlage am Reifen auf. Auf dem Walzenmantel sind Partikel befestigt, die eine rauhe Oberfläche schaffen.

Fig. 1

EP 0 216 282 A2

# COHAUSZ & FLORACK

## PATENTANWALTSBÜRO

SCHUMANNSTR. 97 D-4000 DÜSSELDORF 1

Telefon: (0211) 683346 · Telefax: (0211) 6790871 · Telex: 8586513 cop d

PATENTANWÄLTE:
Dipl.-Ing. W. COHAUSZ · Dipl.-Ing. R. KNAUF · Dipl.-Ing. H. B. COHAUSZ · Dipl.-Ing. D. H. WERNER · Dr. rer. nat. B. REDIES

- 1 -

12.09.1986
HC/Be 45218EP

UNION Sils, van de Loo & Co. GmbH
Ardeyer Straße 13/15
D-5758 Fröndenberg


Fahrradlichtmaschine


Die Erfindung betrifft eine Fahrradlichtmaschine in Form eines Außenläufers mit einem walzenförmigen Gehäuse, das durch Anlage seines Walzenmantels am Fahrradreifen antreibbar ist, wobei die Oberfläche des Walzenmantels Mittel für eine kraftschlüssige Anlage am Reifen aufweist.

Es sind Fahrradlichtmaschinen bekannt, deren Antriebsrolle an der Seite des Fahrradreifens anliegt, um von diesem angetrieben zu werden. Um einen Schlupf zwischen Antriebsrolle und Reifen zu vermeiden, wurde vorgeschlagen, die Antriebsrolle mit einer Riffelung, Zähnen (DE-OS 19 02 947), Stäben (DE-AS 10 69 484) oder Borsten (DE-AS 12 43 547) zu versehen. Diese Konstruktionen sind recht aufwendig.

Ferner sind Lichtmaschinen bekannt (DE-GM 83 02 321), bei denen das gesamte elektromagnetische System in Form einer Walze am Außenumfang des Fahrradreifens abläuft. Bei diesen Lichtmaschinen ist der Ablaufdurchmesser des walzenförmigen Gehäuses - von der Bauart und der Funktion bedingt - wesentlich größer als bei herkömmlichen Fahrrad-

Lichtmaschinen. Dieser größere Durchmesser erfordert besondere Maßnahmen, um ein einwandfreies Abrollen auf dem Fahrradmantel zu gewährleisten. Es ist bekannt, diese Funktion durch Aufbringen einer Rändelung auf dem Umfang des Gehäuses zu erreichen. Bei ungünstigen Witterungsbedingungen erweist sich eine Rändelung jedoch als unzureichend, d.h. das Gehäuse wird nicht kraftschlüssig vom Reifen angetrieben, sondern rutscht - z.B. durch Verschmutzung der Rändelriefen - durch. Ferner hat sich gezeigt, daß die Rändelstruktur der Antriebsrolle - die aus elektromagnetisch funktionell bedingtem, relativ weichem Stahl hergestellt ist - sich sehr schnell abnutzt.

Aufgabe der Erfindung ist es, eine Fahrradlichtmaschine in Form eines Außenläufers so zu verbessern, daß ein einwandfreier Antrieb bei allen Witterungsbedingungen gewährleistet und gleichzeitig die angetriebene Oberfläche sehr verschleißfest ist.

Diese Aufgabe wird erfindungsgemäß dadurch gelöst, daß auf dem Walzenmantel Partikel befestigt sind, die eine rauhe, verschleißfeste Oberfläche schaffen.

Diese Oberfläche stellt sicher, daß ein Schlupf zwischen dem angetriebenen Walzenmantel der Lichtmaschine und dem Reifen nicht entsteht, so daß bei allen Witterungsbedingungen ein einwandfreier Antrieb geschaffen wird. Darüberhinaus ist diese Oberfläche hoch abriebfest und einfach und kostengünstig herzustellen.

Besonders vorteilhaft ist es, wenn die Partikel ganz oder teilweise aus einer Eisenlegierung, insbesondere einem Chrom-Nickel-Stahl, einer Nickellegierung, Silizium oder Kunststoff bestehen. Auch können die Partikel durch z.B. Flamm-Drahtspritzen, Flammpulverspritzen oder Plasmaspritzen auf den Walzenmantel aufgebracht sein.

Alternativ wird vorgeschlagen, daß die Partikel durch Kunststoff, insbesondere durch Kunstharz, an der Walzenoberfläche gebunden sind.

Ein Ausführungsbeispiel der Erfindung wird im folgenden näher beschrieben. Es zeigen:

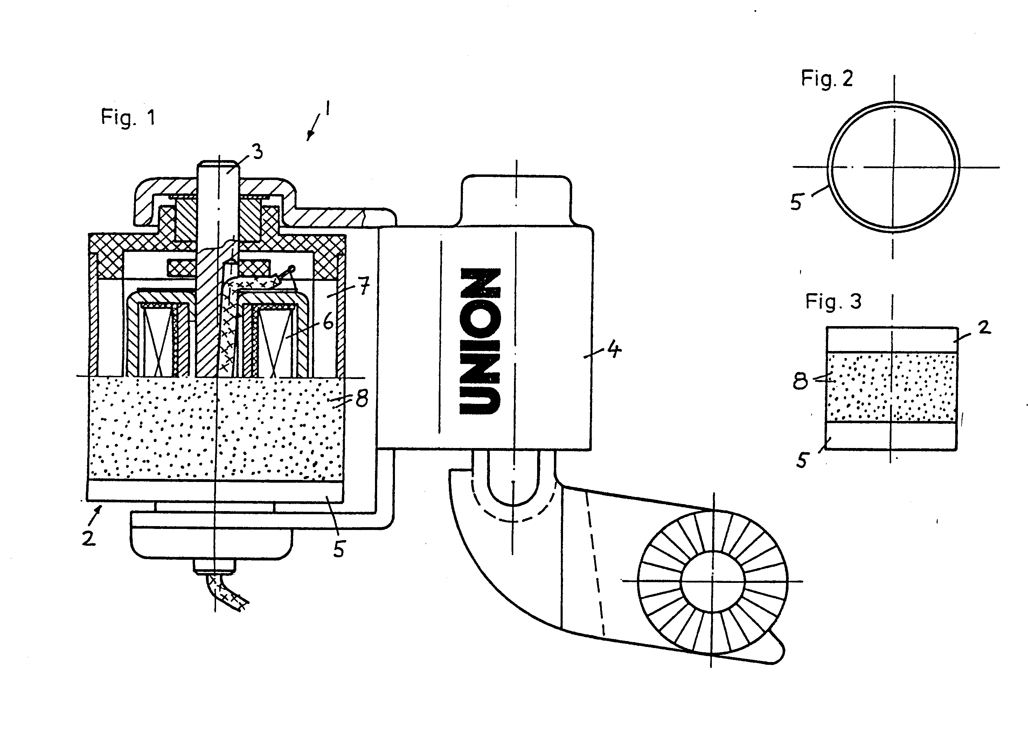

Fig. 1:    den Walzendynamo im Halbschnitt mit durchgehender rauher Walzenoberfläche,

Fig. 2:    das Walzenrohr und

Fig. 3:    das Walzenrohr mit teilweise rauher Walzenoberfläche.

Die als Außenläufer gebaute Fahrradlichtmaschine 1 weist ein walzenförmiges Gehäuse 2 auf, das um die Walzenachse 3 rotiert, wenn es an der Außenfläche eines Fahrradreifens anliegt. Das Gehäuse 2 ist an einem Halter 4 drehbar gelagert, der am Fahrrad befestigbar ist. Im Inneren des Walzenmantels 5 befinden sich die Wicklungen 6 und Magnete 7, wobei die üblicherweise vom Rotor eines Dynamo gebildeten Teile von der Achse der Maschine drehfest gehalten sind.

Die Außenseite eines solchen Walzenmantels 5 ist mit Partikeln 8 versehen, die abriebfest auf dem Mantel 5 sitzen. Die Partikel 8 bestehen aus Hartstoffen, wie Silizium, Kunststoff oder Metall. Bei der Wahl von Metall bewähren sich besonders Eisenlegierungen, wie ein Chrom-Nickel-Stahl oder Nickellegierungen.

Die Partikel 8 können z.B. im Flammspritzverfahren auf den Walzenmantel 5 aufgebracht werden, wobei dafür zu sorgen ist, daß eine gute Verankerung der aufgespritzten Schicht auf dem Untergrund erfolgt. Hierzu kann der Walzenmantel 5 vorher aufgerauht werden.

Alternativ können die Partikel 8 auch durch einen Kunststoff, wie Kunstharz, an die Walzenoberfläche 5 gebunden werden. Hierbei wird das Kunstharz entweder zuerst aufgebracht und dann die Partikel eingedrückt, oder aber der Walzenmantel wird mit einem Gemisch aus Kunstharz und Partikeln beschichtet.

COHAUSZ & FLORACK

**PATENTANWALTSBÜRO**

SCHUMANNSTR. 97 D-4000 DÜSSELDORF 1

Telefon: (0211) 683346 · Telefax: (0211) 6790871 · Telex: 8586513 cop d

**PATENTANWÄLTE:**

Dipl.-Ing. W. COHAUSZ · Dipl.-Ing. R. KNAUF · Dipl.-Ing. H. B. COHAUSZ · Dipl.-Ing. D. H. WERNER · Dr. rer. nat. B. REDIES

<u>Ansprüche:</u>

1. Fahrradlichtmaschine in Form eines Außenläufers mit einem walzenförmigen Gehäuse, das durch Anlage seines Walzenmantels am Fahrradreifen antreibbar ist, wobei die Oberfläche des Walzenmantels Mittel für eine kraftschlüssige Anlage am Reifen aufweist, d a d u r c h g e k e n n z e i c h n e t , daß auf dem Walzenmantel (5) Partikel (8) befestigt sind, die eine rauhe Oberfläche schaffen.

2. Fahrradlichtmaschine nach Anspruch 1, d a d u r c h g e k e n n z e i c h n e t , daß die Partikel (8) ganz oder teilweise aus einer Eisenlegierung, insbesondere einem Chrom-Nickel-Stahl, einer Nickellegierung, Silizium oder Kunststoff bestehen.

3. Fahrradlichtmaschine nach Anspruch 1 oder 2, d a d u r c h g e k e n n z e i c h n e t , daß die Partikel (8) durch Flammspritzen auf den Walzenmantel aufgebracht sind.

4. Fahrradlichtmaschine nach Anspruch 1 oder 2, d a d u r c h g e k e n n z e i c h n e t , daß die Partikel (8) durch Kunststoff, insbesondere durch Kunstharz, an der Walzenoberfläche gebunden sind.

Fig. 1

Fig. 2

Fig. 3

UNION

0216282